# EUROPEAN PATENT SPECIFICATION

(11) **EP 4 190 435 B1**
(45) Date of publication and mention of the grant of the patent: **19.06.2024**
(21) Application number: 22210088.5
(22) Date of filing: 29.11.2022
(51) Int. Cl.: B01F 27/07, B01F 27/072

(54) **A MIXER FOR BIOGAS FERMENTERS, AND METHOD FOR THE ASSEMBLY THEREOF**
MISCHER FÜR BIOGASFERMENTER UND VERFAHREN ZU DESSEN MONTAGE
MÉLANGEUR POUR FERMENTEURS À BIOGAZ ET PROCÉDÉ D'ASSEMBLAGE ASSOCIÉ

(30) Priority: 01.12.2021 IT 202100030446
(43) Date of publication of application: 07.06.2023
(73) Proprietor: Biogas Engineering S.r.l., 36025 Noventa Vicentina (VI) (IT)
(72) Inventor: ZOIA, Luciano, I-35034 LOZZO ATESTINO (Padova) (IT)
(74) Representative: Savoca, Agatino

(56) References cited:
- WO-A1-2006/079228
- CN-A- 113 444 615
- CN-B- 103 387 932
- DE-U1-202011 105 776

## Description

### Technical field

The present invention is generally in the field of fermentation plants for waste organic materials, for the production of biogas; in particular, the invention relates to a mixer for biogas fermenters, and a method for the assembly thereof.

### Summary of the invention

Fermentation plants for biogas production are known to include tanks or reservoirs into which organic material is poured and allowed to ferment.

The material is continuously stirred by mixers comprising a plurality of stirring elements, typically in the form of blades brought into rotation by rotating shafts housed in these tanks.

The stirring elements generally comprise a fork-shaped root, which straddles the shaft and is attached thereto by bolts.

A solution of the aforementioned type is known from EP 2837421 A1, in which the ends of the attachment fork are bolted to plates radially protruding from opposite sides of the shaft. However, this configuration does not allow for an appreciably stable attachment of the blade to the shaft, since the root of the blade will be constrained only to the aforesaid plates, and radial play will still remain between the fork and the shaft.

The object of this invention is to overcome the aforementioned problems.

Document WO 2006/079228 A1 discloses a mixer in accordance with the preamble of claim 1 and a method in accordance with the preamble of claim 10.

To achieve this, a mixer according to the invention comprises a rotatable shaft and at least one stirring element constrained to the shaft by welding along one or more points of at least one of the arcuate profiles of contact between a root portion of the stirring element and said shaft. In this way, a more stable attachment of the stirring element to the shaft is achieved.

A pair of radial projections is also provided, attached to the shaft on opposite sides thereof and facing (but not integral with or mechanically connected to) the circumferential ends of the attachment portion. The projections act as circumferential end stops against which the attachment portion may alternately abut when said portion tends to slide circumferentially with respect to the shaft due to the resistance opposed by the fermenting material to the rotation of the mixer.

Preferably, the projections are spaced apart from the respective circumferential ends of the attachment portion with non-zero angular play, such that the attachment portion may abut against them when it undergoes a predetermined circumferential sliding relative to the shaft, induced by the resistance opposed by the fermenting material to the rotation of the mixer.

In this way, the circumferential stresses at the root of the stirring element are prevented from burdening the welds to the point of possibly causing their breakage, inasmuch as the radial projections are configured to exert an action confining the circumferential deformation or sliding of the attachment portion with respect to the shaft.

The aforesaid and other objects and advantages are achieved, according to one aspect of the invention, by a mixer for biogas fermenters and a method for the assembly thereof having the features defined in the appended claims.

### Brief description of the drawings

The functional and structural features of some preferred embodiments of a mixer for biogas fermenters and a method for the assembly thereof according to the invention will now be described. Reference is made to the accompanying drawings, in which:
- Fig. 1 and 2 are a frontal and axial schematic view, respectively, of a portion of a mixer according to an embodiment of the invention;
- Fig. 3 and 4 are a frontal and axial schematic view, respectively, of a portion of a mixer according to an alternative embodiment of the invention, in which a section of the welding points is shown in magnification; and
- Fig. 5 is a schematic perspective view of a segment of a shaft of the mixer, from which projections for abutment with an attachment portion of a stirring element protrude radially, according to an embodiment of the invention.

### Detailed description

Before explaining in detail a plurality of embodiments of the invention, it should be clarified that the invention is not limited in its application to the design details and configuration of the components presented in the following description or illustrated in the drawings. The invention may assume other embodiments and be implemented or constructed in practice in different ways. It should also be understood that the phraseology and terminology have a descriptive purpose and should not be construed as limiting.

Referring by way of example to the figures, a mixer 9 for biogas fermenters, designed to stir a fermenting material, comprises a shaft 10, rotatable about an axis of rotation x, and a stirring element 12, comprising an attachment portion 14 configured to circumferentially surround part of the shaft 10.

Thus, the stirring element 12 will substantially have a C-shape, adapted to straddle the shaft 10, the stirring element 12 being in contact with the shaft 10 along a pair of circular arc profiles (hereinafter, also referred to as "circumferential contact profiles") arranged at the base of the axially opposite faces of said stirring element 12.

The attachment portion 14 is attached to the shaft 10 by welding in at least one point of at least one of the circumferential contact profiles between this attachment portion 14 and the shaft 10.

A pair of projections 16 is also provided, projecting radially from the shaft 10 from diametrically opposite parts of said shaft, these projections 16 facing respective circumferential ends of the attachment portion 14 of the stirring element 12.

Each projection 16 is configured to form a stop against which the relevant circumferential end of the attachment portion 14 may abut, preventing this projection 16 and the relevant circumferential end from being attached to or integral with each other. In other words, the projections 16 are configured to form a surface against which the respective circumferential ends of the attachment portion 14 may abut, but without any stable connection or mutual attachment therebetween.

At least one of the projections 16 may be configured to form a surface against which the relevant circumferential end of the attachment portion 14 abuts when the mixer 9 is at rest. In this case, the attachment portion 14 would rest (in a resting condition of the mixer 9) on the at least one projection 16, without being integral with or stably constrained thereto. Alternatively, or in combination, at least one of the projections 16 may be angularly spaced from the relevant circumferential end of the attachment portion 14 when the mixer 9 is at rest and be configured to form a stop against which the relevant circumferential end of the attachment portion 14 may abut in the presence of stress on the stirring element 10 that induces an angular deformation and/or sliding of the attachment portion 14 with respect to the shaft 10, which typically occurs due to the viscous friction between the stirring element 12 and the fermenting material when the shaft 10 is in rotation.

Preferably, each projection 16 is configured to prevent an angular sliding of the attachment portion 14 with respect to the shaft 10 along a circumferential direction (i.e., toward the section of the shaft 10 that extends beyond the projection 16 and is circumferentially complementary to the arcuate portion in contact with the attachment portion 10), and to allow angular sliding of the attachment portion 14 with respect to the shaft 10 along the opposite circumferential direction.

Preferably, the projections 16, in a resting condition of the mixer 9, are angularly spaced apart with respect to the respective circumferential ends of the attachment portion 14 of the stirring element 12 by an angle between 0° and 10°, and even more preferably by an angle between 0.1° and 5°.

According to a preferred embodiment, the projections 16, with the mixer 9 in a resting condition, are angularly detached from the respective circumferential ends of the attachment portion 14 of the stirring element 12.

The projections 16 are suitably configured to alternately form a stop against which the respective circumferential ends of the attachment portion may abut when, due to the resistance opposed by the fermenting material to the rotation of the mixer 9, the attachment portion 14 undergoes or tends to undergo angular elastic deformation and/or sliding with respect to the shaft 10 exceeding a predetermined magnitude. An angular play D between the projections 16 and the respective circumferential ends of the stirring element 12 may be appropriately sized according to this magnitude, which will depend on the mechanical features of the weld, so that excessive stresses caused by the angular sliding of the attachment portion 14 with respect to the shaft 10 are not induced.

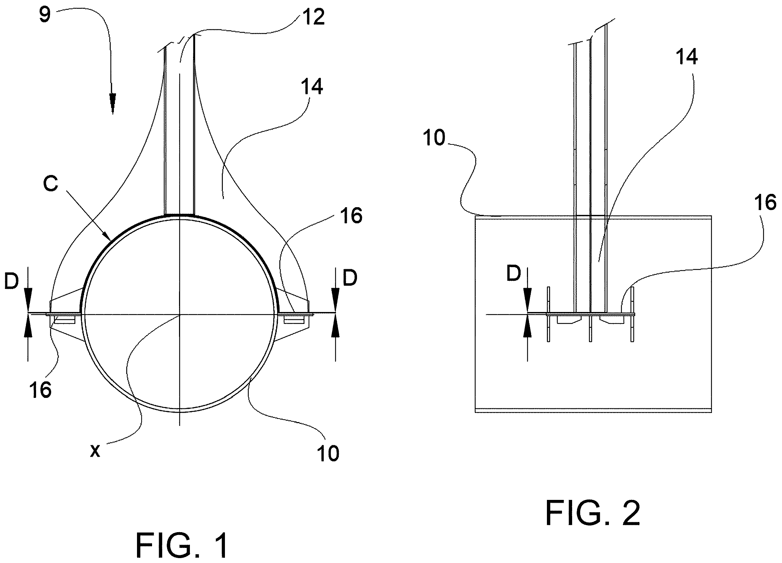

According to one embodiment (illustrated by way of example in Fig. 1 and 2), the attachment portion 14 is welded to the shaft 10 continuously along most of the angular extension of one of the circumferential contact profiles between said attachment portion 14 and the shaft 10. That is, a continuous weld bead C is made along most of the arcuate contact profile on one side of the stirring element.

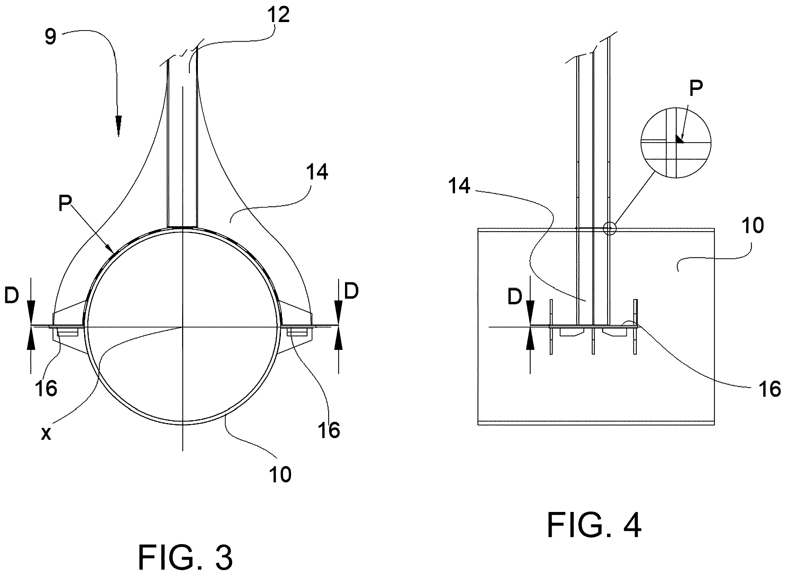

According to an alternative embodiment (illustrated by way of example in Fig. 3 and 4), the attachment portion 14 is welded discretely to the shaft 10 at a plurality of angularly spaced points P along at least one of the circumferential contact profiles between said attachment portion 14 and the shaft 10. "Welding points" refers to localized portions of the circumferential contact profile with an angular extension significantly less than the total angular extension of said circumferential contact profile; for example, they may be substantially point-like welds, angularly distributed along the circumferential contact profile, or welds extending along circumferential sections having an angular extension between 5° and 15°, interspersed with circumferential sections having no welds.

Preferably, the attachment portion 14 is welded to the shaft 10 at a plurality of angularly spaced points along both circumferential contact profiles between said attachment portion 14 and the shaft 10, where the welding points on axially opposite sides of the stirring element 12 are themselves angularly offset.

Preferably, the projections 16 are shaped as a pair of shelves or fins (appropriately planar), lying on a diametrical plane of the shaft 10 and projecting radially outward therefrom.

According to one embodiment, the projections 16 are extended axially for a length at least equal to the axial distance between the opposite faces of the attachment portion 14 (or, in other words, to the axial thickness of the attachment portion 14).

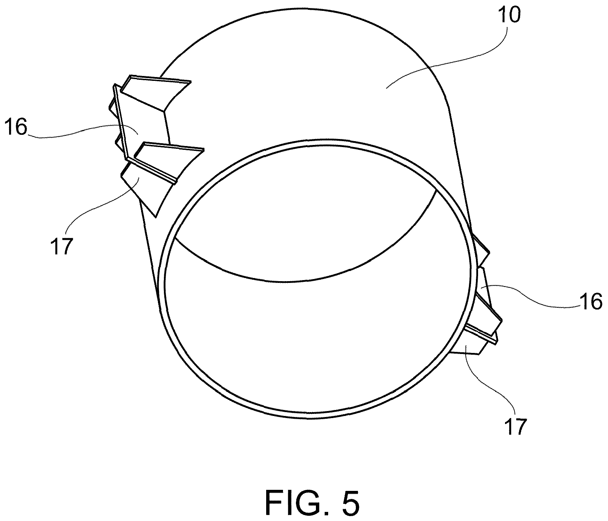

According to one embodiment (seen by way of example in Fig. 5), the projections 16 are constrained to the shaft 10 and/or circumferentially reinforced by circumferential brackets 17, preferably placed at the axial ends of the respective projections 16.

According to one aspect of the invention, a method for assembling a mixer for biogas fermenters comprises the steps of providing a shaft 10, configured to rotate about an axis of rotation x; providing at least one stirring element 12, comprising an attachment portion 14 configured to circumferentially surround part of the shaft 10; welding this attachment portion 14 to the shaft 10 in at least one point of at least one of the circumferential contact profiles between the attachment portion 14 and said shaft 10; and attaching a pair of projections 16, projecting radially from this shaft 10, on diametrically opposite portions of the shaft 10, so that said projections 16 are facing respective circumferential ends of the attachment portion 14 of the stirring element 12, where the projections 16 are configured to alternately form a stop against which the respective circumferential ends may abut when the attachment portion 14 undergoes angular elastic deformation and/or sliding with respect to the shaft 10 induced by the resistance opposed by the fermenting material to the rotation of the mixer 9.

Preferably, at least one of the projections 16 is, in a resting condition of the mixer 9, angularly spaced apart from the relevant circumferential end of the attachment portion 14 of the stirring element 12.

According to one embodiment, the attachment portion 14 is attached to the shaft 10 by continuously welding said portion to said shaft along most of the angular extension of one of the circumferential contact profiles between this attachment portion 14 and the shaft 10.

Alternatively, the attachment portion 14 is attached to the shaft 10 by welding the attachment portion 14 to the shaft 10 at a plurality of angularly spaced points along at least one of the circumferential contact profiles between said attachment portion 14 and the shaft 10.

Throughout this description and in the claims, the terms and expressions indicating positions and orientations, such as "axial" or "radial," refer to the axis of rotation x of the shaft 10.

Various aspects and embodiments of a mixer for biogas fermenters and a method for the assembly thereof according to the invention have been described. It is understood that each embodiment may be combined with any other embodiment. Moreover, the invention is not limited to the embodiments described, but may be varied within the scope defined by the appended claims.

## Claims

1. A mixer (9) for biogas fermenters, adapted to stir a fermenting material, said mixer comprising:
- a shaft (10), rotatable around an axis of rotation (x);
- a stirring element (12), comprising an attachment portion (14) configured to circumferentially embrace part of the shaft (10), said attachment portion (14) being welded to the shaft (10) in at least one point of at least one of the circumferential contact profiles between said attachment portion (14) and said shaft (10); **characterized in that** it further comprises:
- a pair of projections (16), radially protruding from the shaft (10) from diametrically opposite parts of said shaft (10), said projections (16) facing respective circumferential ends of the attachment portion (14) of the stirring element (12), and each being configured to form a stop against which the relevant circumferential end of the attachment portion (14) may abut, preventing the projection (16) and the relevant circumferential end from being fixed or integral with one another.

2. The mixer according to claim 1, wherein each projection (16) is configured in such a way as to prevent an angular sliding of the attachment portion (14) with respect to the shaft (10) along a circumferential direction, and to allow an angular sliding of the attachment portion (14) with respect to the shaft (10) along an opposite circumferential direction.

3. The mixer according to claim 1 or 2, wherein the projections (16), in a rest condition of the mixer (9), are angularly spaced with respect to the respective circumferential ends of the attachment portion (14) of the stirring element (12) at an angle between 0° and 10°.

4. The mixer according to claim 3, wherein the projections (16), in a rest condition of the mixer (9), are angularly detached from the respective circumferential ends of the attachment portion (14) of the stirring element (12).

5. The mixer according to any of the preceding claims, wherein the attachment portion (14) is welded to the shaft (10) continuously along most of the angular extension of one of the circumferential contact profiles between said attachment portion (14) and the shaft (10).

6. The mixer according to any of claims 1 to 4, wherein the attachment portion (14) is welded to the shaft (10) in a plurality of angularly spaced points along at least one of the circumferential contact profiles between said attachment portion (14) and the shaft (10).

7. The mixer according to claim 6, wherein the attachment portion (14) is welded to the shaft (10) in a plurality of angularly spaced points along both circumferential contact profiles between said attachment portion (14) and the shaft (10), the welding points on axially opposite sides of the stirring element (12) being in turn angularly offset.

8. The mixer according to any of the preceding claims, wherein the projections (16) are shaped as a pair of brackets lying on a diametrical plane of the shaft (10) and radially protruding towards the outside of the latter.

9. The mixer according to any of the preceding claims, wherein the projections (16) are axially extended for a length at least equal to the axial distance between the opposite faces of the attachment portion (14).

10. A method for assembling a mixer for biogas fermenters, including the steps of:
a) providing a shaft (10);
b) providing at least one stirring element (12), comprising an attachment portion (14) configured to circumferentially embrace part of the shaft (10);
c) welding said attachment portion (14) to the shaft (10) in at least one point of at least one of the circumferential contact profiles between said attachment portion (14) and said shaft (10); **characterized in that** it further comprises:
d) fixing, on diametrically opposite parts of the shaft (10), a pair of projections (16) radially protruding from said shaft (10), in such a way that said projections (16) face respective circumferential ends of the attachment portion (14) of the stirring element (12), said projections (16) being configured to alternately form a stop against which the respective circumferential ends may abut when the attachment portion (14) undergoes or tends to undergo a deformation and/or an angular sliding with respect to the shaft (10) induced by the resistance opposed by the fermenting material to the rotation of the mixer (9).

11. The method according to claim 10, wherein step b) is performed by continuously welding the attachment portion (14) to the shaft (10) along most of the angular extension of one of the circumferential contact profiles between said attachment portion (14) and the shaft (10).

12. The method according to claim 10, wherein step b) is performed by welding the attachment portion (14) to the shaft (10) at a plurality of angularly spaced points along at least one of the circumferential contact profiles between said attachment portion (14) and the shaft (10).

## Patentansprüche

1. Mischer (9) für Biogasfermentierer, ausgelegt zum Rühren eines Fermentationsmaterials, wobei der Mischer aufweist:
- eine um eine Drehachse (x) drehbare Welle (10);
- ein Rührelement (12), aufweisend einen Befestigungsabschnitt (14), der dazu ausgelegt ist, einen Teil der Welle (10) umlaufend zu umschließen, wobei der Befestigungsabschnitt (14) an mindestens einem Punkt mindestens einer der umlaufenden Kontaktkonturen zwischen dem Befestigungsabschnitt (14) und der Welle (10) mit der Welle (10) verschweißt ist; **dadurch gekennzeichnet, dass** er weiter aufweist:
- ein Paar von Vorsprüngen (16), die von diametral entgegengesetzten Teilen der Welle (10) radial von der Welle (10) hervorstehen, wobei die Vorsprünge (16) jeweiligen Umfangsenden des Befestigungsabschnitts (14) des Rührelements (12) zugewandt sind und jeder dazu ausgelegt ist, einen Anschlag auszubilden, an den das betreffende Umfangsende des Befestigungsabschnitts (14) anschlagen kann, wodurch verhindert wird, dass der Vorsprung (16) und das betreffende Umfangsende miteinander fixiert oder verbunden werden.

2. Mischer nach Anspruch 1, wobei jeder Vorsprung (16) derart ausgestaltet ist, dass er ein Winkelgleiten des Befestigungsabschnitts (14) in Bezug auf die Welle (10) entlang einer Umfangsrichtung verhindert und ein Winkelgleiten des Befestigungsabschnitts (14) in Bezug auf die Welle (10) entlang einer entgegengesetzten Umfangsrichtung zulässt.

3. Mischer nach Anspruch 1 oder 2, wobei die Vorsprünge (16) in einem Ruhezustand des Mischers (9) in Bezug auf die jeweiligen Umfangsenden des Befestigungsabschnitts (14) des Rührelements (12) einen Winkelabstand zwischen 0° und 10° haben.

4. Mischer nach Anspruch 3, wobei die Vorsprünge (16) in einem Ruhezustand des Mischers (9) von den jeweiligen Umfangsenden des Befestigungsabschnitts (14) des Rührelements (12) winkelig beabstandet sind.

5. Mischer nach einem der vorangehenden Ansprüche, wobei der Befestigungsabschnitt (14) entlang des überwiegenden Teils der Winkelausdehnung einer der umlaufenden Kontaktkonturen zwischen dem Befestigungsabschnitt (14) und der Welle (10) durchgehend mit der Welle (10) verschweißt ist.

6. Mischer nach einem der Ansprüche 1 bis 4, wobei der Befestigungsabschnitt (14) an einer Vielzahl von winkelig beabstandeten Punkten entlang mindestens einer der umlaufenden Kontaktkonturen zwischen dem Befestigungsabschnitt (14) und der Welle (10) mit der Welle (10) verschweißt ist.

7. Mischer nach Anspruch 6, wobei der Befestigungsabschnitt (14) an einer Vielzahl von winkelig beabstandeten Punkten entlang der beiden umlaufenden Kontaktkonturen zwischen dem Befestigungsabschnitt (14) und der Welle (10) mit der Welle (10) verschweißt ist, wobei die Verschweißpunkte an axial entgegengesetzten Seiten des Rührelements (12) wiederum winkelig versetzt sind.

8. Mischer nach einem der vorangehenden Ansprüche, wobei die Vorsprünge (16) als ein Paar von Klammern geformt sind, die auf einer diametralen Ebene der Welle (10) liegen und radial zu der Außenseite letzterer hervorstehen.

9. Mischer nach einem der vorangehenden Ansprüche, wobei die Vorsprünge (16) sich axial über eine Länge, die zumindest dem Axialabstand zwischen den entgegengesetzten Stirnflächen des Befestigungsabschnitts (14) entspricht, erstrecken.

10. Verfahren zum Zusammenbau eines Mischers für Biogasfermentierer, aufweisend die folgenden Schritte:
a) Bereitstellen einer Welle (10);
b) Bereitstellen mindestens eines Rührelements (12), aufweisend einen Befestigungsabschnitt (14), der dazu ausgelegt ist, einen Teil der Welle (10) umlaufend zu umschließen;
c) Verschweißen des Befestigungsabschnitts (14) mit der Welle (10) an mindestens einem Punkt mindestens einer der umlaufenden Kontaktkonturen zwischen dem Befestigungsabschnitt (14) und der Welle (10); **dadurch gekennzeichnet, dass** es weiter aufweist:
d) Anbringen, an diametral entgegengesetzten Teilen der Welle (10), eines Paares von Vorsprüngen (16), die derart radial von der Welle (10) hervorstehen, dass die Vorsprünge (16) jeweiligen Umfangsenden des Befestigungsabschnitts (14) des Rührelements (12) zugewandt sind, wobei die Vorsprünge (16) dazu ausgelegt sind, abwechselnd einen Anschlag auszubilden, an welchen die jeweiligen Umfangsenden anschlagen können, wenn der Befestigungsabschnitt (14) eine Verformung und/oder ein Winkelgleiten bezüglich der Welle (10) erfährt oder dazu neigt, welche/s durch den Widerstand hervorgerufen wird, den das Fermentationsmaterial der Drehung des Mischers (9) entgegensetzt.

11. Verfahren nach Anspruch 10, wobei Schritt b) durch kontinuierliches Verschweißen des Befestigungsabschnitts (14) mit der Welle (10) entlang des überwiegenden Teils der Winkelausdehnung einer der umlaufenden Kontaktkonturen zwischen dem Befestigungsabschnitt (14) und der Welle (10) durchgeführt wird.

12. Verfahren nach Anspruch 10, wobei Schritt b) durch Verschweißen des Befestigungsabschnitts (14) mit der Welle (10) an einer Vielzahl von winkelig beabstandeten Punkten entlang mindestens einer der umlaufenden Kontaktkonturen zwischen dem Befestigungsabschnitt (14) und der Welle (10) durchgeführt wird.

## Revendications

1. Mélangeur (9) pour des fermenteurs à biogaz, adapté pour agiter un matériau de fermentation, ledit mélangeur comprenant :
- un arbre (10) rotatif autour d'un axe de rotation (x) ;
- un élément d'agitation (12) comprenant une partie d'attache (14) configurée pour embrasser sur la circonférence une partie de l'arbre (10), ladite partie d'attache (14) étant soudée à l'arbre (10) dans au moins un point d'au moins un des profils de contact circonférentiels entre ladite partie d'attache (14) et ledit arbre (10) ; **caractérisé en ce qu'**il comprend en outre :
- une paire de saillies (16) faisant saillie radialement de l'arbre (10) depuis des parties diamétralement opposées dudit arbre (10), lesdites saillies (16) faisant face aux extrémités circonférentielles respectives de la partie d'attache (14) de l'élément d'agitation (12), et chacune étant configurée pour former une butée, contre laquelle l'extrémité circonférentielle pertinente de la partie d'attache (14) peut buter, empêchant la saillie (16) et l'extrémité circonférentielle pertinente d'être fixées ou d'être d'un seul tenant l'une avec l'autre.

2. Mélangeur selon la revendication 1, dans lequel chaque saillie (16) est configurée de manière à empêcher un coulissement angulaire de la partie d'attache (14) par rapport à l'arbre (10) le long d'une direction circonférentielle, et à permettre un coulissement angulaire de la partie d'attache (14) par rapport à l'arbre (10) le long d'une direction circonférentielle opposée.

3. Mélangeur selon la revendication 1 ou 2, dans lequel les saillies (16), dans une condition de repos du mélangeur (9), sont espacées angulairement par rapport aux extrémités circonférentielles respectives de la partie d'attache (14) de l'élément d'agitation (12) selon un angle entre 0° et 10°.

4. Mélangeur selon la revendication 3, dans lequel les saillies (16), dans une condition de repos du mélangeur (9), sont détachées angulairement des extrémités circonférentielles respectives de la partie d'attache (14) de l'élément d'agitation (12).

5. Mélangeur selon l'une quelconque des revendications précédentes, dans lequel la partie d'attache (14) est soudée à l'arbre (10) en continu le long de la plupart de l'extension angulaire d'un des profils de contact circonférentiels entre ladite partie d'attache (14) et l'arbre (10).

6. Mélangeur selon l'une quelconque des revendications 1 à 4, dans lequel la partie d'attache (14) est soudée à l'arbre (10) dans une pluralité de points espacés angulairement le long d'au moins un des profils de contact circonférentiels entre ladite partie d'attache (14) et l'arbre (10).

7. Mélangeur selon la revendication 6, dans lequel la partie d'attache (14) est soudée à l'arbre (10) dans une pluralité de points espacés angulairement le long des deux profils de contact circonférentiels entre ladite partie d'attache (14) et l'arbre (10), les points de soudage sur des côtés axialement opposés de l'élément d'agitation (12) étant à leur tour décalés angulairement.

8. Mélangeur selon l'une quelconque des revendications précédentes, dans lequel les saillies (16) sont formées comme une paire de crochets reposant sur un plan diamétral de l'arbre (10) et faisant saillie radialement vers le côté extérieur de ce dernier.

9. Mélangeur selon l'une quelconque des revendications précédentes, dans lequel les saillies (16) sont axialement étendues pour une longueur au moins égale à la distance axiale entre les faces opposées de la partie d'attache (14).

10. Procédé d'assemblage d'un mélangeur pour des fermenteurs à biogaz, incluant les étapes suivantes :
a) la fourniture d'un arbre (10) ;
b) la fourniture au moins d'un élément d'agitation (12) comprenant une partie d'attache (14) configurée pour embrasser sur la circonférence une partie de l'arbre (10) ;
c) le soudage de ladite partie d'attache (14) à l'arbre (10) dans au moins un point d'au moins un des profils de contact circonférentiels entre ladite partie d'attache (14) et ledit arbre (10) ; **caractérisé en ce qu'**il comprend en outre :
d) la fixation, sur des parties diamétralement opposées de l'arbre (10), d'une paire de saillies (16) faisant saillie radialement dudit arbre (10) de telle manière que lesdites saillies (16) fassent face aux extrémités circonférentielles respectives de la partie d'attache (14) de l'élément d'agitation (12), lesdites saillies (16) étant configurées pour former en alternance une butée, contre laquelle les extrémités circonférentielles respectives peuvent buter lorsque la partie d'attache (14) subit ou tend à subir une déformation et/ou un coulissement angulaire par rapport à l'arbre (10) induit par la résistance opposée par le matériau de fermentation à la rotation du mélangeur (9).

11. Procédé selon la revendication 10, dans lequel l'étape b) est réalisée par soudage en continu de la partie d'attache (14) à l'arbre (10) le long de la plupart de l'extension angulaire d'un des profils de contact circonférentiels entre ladite partie d'attache (14) et l'arbre (10).

12. Procédé selon la revendication 10, dans lequel l'étape b) est réalisée par soudage de la partie d'attache (14) à l'arbre (10) dans une pluralité de points espacés angulairement le long d'au moins un des profils de contact circonférentiels entre ladite partie d'attache (14) et l'arbre (10).
